# EUROPÄISCHE PATENTSCHRIFT

(11) **EP 2 318 166 B1**
(45) Veröffentlichungstag und Bekanntmachung des Hinweises auf die Patenterteilung: **05.11.2014**
(21) Anmeldenummer: 09777091.1
(22) Anmeldetag: 10.07.2009
(51) Int. Cl.: B23C 3/28, B23C 5/10

(54) **WERKZEUG FÜR SPANENDE BEARBEITUNG EINES WERKSTÜCKS**
TOOL FOR MACHINING A WORK PIECE
OUTIL POUR L'USINAGE PAR ENLÈVEMENT DE COPEAUX D'UNE PIÈCE À USINER

(30) Priorität: 30.07.2008 DE 102008036562
(43) Veröffentlichungstag der Anmeldung: 11.05.2011
(73) Patentinhaber: Hartmetall-Werkzeugfabrik Paul Horn GmbH, 72072 Tübingen (DE)
(72) Erfinder: LUIK, Matthias, 72766 Reutlingen (DE)
(74) Vertreter: Keck, Stephan
(86) Internationale Anmeldenummer: PCT/EP2009/005007
(87) Internationale Veröffentlichungsnummer: WO 2010/012367

(56) Entgegenhaltungen:
- EP-A- 1 029 620
- EP-A- 1 972 399
- WO-A-02/076661

## Beschreibung

Die vorliegende Erfindung betrifft ein Werkzeug für spanende Bearbeitung eines Werkstücks mit einem Halter mit einer stirnseitig angeordneten Aufnahrneöffnung und mit einem Schneidkopf mit mindestens einem, an dem werkstückseitigen Ende angeordneten Schneidelement. Insbesondere betrifft die vorliegende Erfindung einen Kugelbahnfräser.

Beim Fräsen von Gelenkzapfen und -naben kommen meist Sonderwerkzeuge, so genannte Kugelbahnfräser, zum Einsatz. Diese Kugelbahnfräser fräsen stirnseitig bei verschiedenen Eingriffsbreiten und Bearbeitungstiefen, wozu der Kugelbahnfräser normalerweise unter 20° angestellt wird. Teilweise entsprechen die Bahnen Zylinderausschnitten, teilweise sind die Bahnen aber auch gekrümmt, was sehr biegesteife Werkzeuge erforderlich macht. Gefräst wird sowohl in weichen als auch in gehärteten Werkstoffen. je nach Anwendungszweck kommen derzeit verschiedene Werkzeugtypen zum Einsatz. Derartige Kugelbahnfräser sind beispielsweise in der DE 199 56 592 A1 und der DE 199 45 360 A1 beschrieben.

Bei den bekannten Kugelbahnfräsern sind meist mehrere Schneidelemente, z.B. Wendeschneidplatten, in entsprechenden Ausnehmungen am werkstückseitigen Ende des Halters (oft auch als Grundkörper bezeichnet) angeordnet. Die Schneidelemente weisen dazu eine mittige Bohrung auf, durch die hindurch das jeweilige Schneidelement mittels einer Klemmschraube mit dem Halter verschraubt ist. Der Halter weist dazu entsprechende Gewindebohrungen auf.

Abgesehen davon, dass es je nach Einbaulage des Werkzeugs in der entsprechenden Werkzeugmaschine mitunter schwierig ist, die einzelnen Schneidelemente bei noch in die Werkzeugmaschine eingespanntem Zustand zu wechseln, bedeutet eine mitten durch das Schneidelement verlaufende Bohrung grundsätzlich auch eine Verringerung der Steifigkeit und Festigkeit des Schneidelements. Zudem wird dadurch die Länge der einen oder mehreren Schneidkanten an dem Schneidelement nach oben hin begrenzt.

Aus der EP 1 029 620 A2 ist ein Werkzeug bekannt, bei dem ein Schaft aus Hartmetall in einen Halter aus Stahl eingeschrumpft ist. An den Schaft ist über ein Gewinde ein Verlängerungsbauteil aus Stahl angeschraubt, in welches wiederum ein Schneidkörper eingeschrumpft ist. Der Oberbegriff von Anspruch 1 basiert auf diesem Dokument.

Aus der WO 02/076661 A1 ist eine Werkzeuganordnung mit einem Halter mit einem Maschinenschaft und einem Werkzeugschaft bekannt, wobei eine Bohrung beide Schäfte durchdringt. Ein auswechselbarer Schneidkörper aus Hartstoff wird mit integralem Zapfen gepresst oder ein Zapfen wird passgenau durch Fügen rückwärtig angefügt.

Der Erfindung liegt die Aufgabe zugrunde, das eingangs beschriebene Werkzeug für spanende Bearbeitung eines Werkstücks dahingehend zu verbessern, dass die eine oder mehreren Schneidkanten an dem mindestens einen Schneidelement eine größere Länge aufweisen können, wobei gleichzeitig ein einfacher Wechsel des Schneidelements und/oder des Schneidkopfes bei in die Werkzeugmaschine eingespanntem Halter möglich sein soll.

Diese Aufgabe wird ausgehend von dem eingangs genannten Werkzeug dadurch gelöst, dass eine im Wesentlichen aus Hartmetall bestehende Hülse vorgesehen ist, die mit einem ersten, halterseitigen Ende passgenau in die Aufnahmeöffnung des Halters eingesetzt ist und in oder an deren zweitem, schneidkopfseitigen Ende der Schneidkopf angeordnet ist, und dass Verkopplungsmittel zum Verkoppeln von Halter, Schneidkopf und Hülse vorgesehen sind. Ferner ist erfindungsgemäß vorgesehen, dass der Schneidkopf an seinem halterseitigen Ende einen durch die Hülse bis in die Aufnahmeöffnung des Halters ragenden Fortsatz aufweist.

Der Erfindung liegt dabei die Erkenntnis zugrunde, eine Schnittstelle zwischen Halter und Schneidkopf zu schaffen, die eine entsprechende Steifigkeit aufweist, um die bei der spanenden Bearbeitung auftretenden Kräfte abzufangen, beispielsweise eine bei einem Kugelbahnfräser aufgrund der gewinkelten Anstellung auftretende Biegebeanspruchung aufzunehmen, um so die erforderliche Genauigkeit des Werkzeugs zu gewährleisten. Erfindungsgemäß ist deshalb als Teil dieser Schnittstelle eine aus Hartmetall bestehende Hülse vorgesehen, die die erforderliche Steifigkeit bietet.

Der Halter besteht aus Gründen der Herstellbarkeit bevorzugt aus Stahl. Durch seinen großen Querschnitt ist die Steifigkeit an dieser Stelle gegeben. Der werkstückseitige (obere) Teil des Werkzeugs fertigt die Kugelbahn, wobei die Länge entscheidend ist. Der "Mittelteil", also die Hartmetallhülse, kann im Querschnitt nicht breiter sein, weil es sonst zur Kollision kommt. Somit ergibt sich im Mittelteil grundsätzlich ein "Rohr", was möglichst steif sein sollte. Daher wird hier auf Hartmetall zurückgegriffen. Die Schnittstelle zwischen Hartmetallhülse und Schneidkopf ist wiederum bevorzugt eine Kombination aus Hartmetall (Hülse) und Stahl (Teil des Schneideinsatzes). Stahl wird an dieser Stelle bevorzugt deshalb verwendet, weil hier eine sehr enge Passung vorhanden sein muss und es teilweise im Stahl zu plastischen Verformungen kommen kann. Wäre diese Stelle auch aus Hartmetall, könnten sich aufgrund der Pressung Abplatzungen ergeben. Sinnvollerweise wird aber die Höhe des Stahles im Schneideinsatz, auf welchen dann die Schneide kommt, so klein wie möglich gehalten.

Durch diese Aufteilung kann der Halter, falls ein Defekt an der Hülse auftritt, wieder verwendet werden.

Weiter besteht das Problem der Befestigung. Wäre der Halter aus Hartmetall, könnte weder geschrumpft, noch gepresst werden. Auch weitere Verbindungen wie Löten sind schwer machbar. Das gleiche gilt für den Schneidkopf. Durch den Stahleinsatz ist der Schneidkopf sehr gut an die jeweilige Aufgabe angepasst, sei es durch aufgelötete einzelne Schneiden oder durch eine komplett aus Hartmetall bestehende Schneide.

Das mindestens eine Schneidelement kann grundsätzlich auf unterschiedliche Weise an dem Schneidkopf angebracht sein. Grundsätzlich ist es auch weiterhin möglich, dass als Schneidelemente Wendeschneidplatten der bekannten Art, also mit einer zentralen Bohrung, durch die eine mit dem Schneidkopf verschraubte Klemmschraube greift, eingesetzt werden. Dies ist jedoch bei der erfindungsgemäßen Ausgestaltung des Werkzeugs nicht zwingend. Vielmehr kann der Schneidkopf auch einstückig ausgebildet sein, an dem ein oder mehrere Schneidelemente, beispielsweise aus Hartmetall, aufgelötet sind. Ferner kann auch der gesamte Schneidkopf einstückig aus Hartmetall mit entsprechenden Schneiden gebildet oder zweistückig mit einem (vorzugsweise nicht aus Hartmetall bestehenden) Grundkörper und einem (vollständig oder zumindest teilweise aus Hartmetall bestehenden) Wechselkopf mit einer oder mehreren Schneiden gebildet sein. Je nach Einsatzzweck lässt sich dann eine Ausgestaltung wählen, bei der ein einfacheres Auswechseln des Schneidkopfes bzw. von Teilen des Schneidkopfes bei in die Werkzeugmaschine eingespanntem Halter möglich ist.

Erfindungsgemäß ist es somit möglich, das Werkzeug so auszugestalten, dass es bis zum Zentrum des Werkzeugs schneiden kann. Dadurch sind größere Schnitttiefen möglich und die Bearbeitungszeit verkürzt sich. Ein im Zentrum des Schneidelements befindliches Loch für eine Klemmschraube, wodurch sich die Schneidenlänge um den Radius des Durchgangsloches verkürzt, ist somit erfindungsgemäß nicht zwingend erforderlich.

Die genannte Aufgabe wird durch ein derartiges Werkzeug somit vollständig gelöst.

Bevorzugte Ausgestaltungen des erfindungsgemäßen Werkzeugs sind in den Unteransprüchen angegeben.

In einer bevorzugten Ausgestaltung ist vorgesehen, dass die Hülse ringförmig ausgestaltet und in die Aufnahmeöffnung des Halters eingesetzt ist. Die Hülse ist grundsätzlich mit dem Halter entweder verpresst, geschrumpft oder verklebt/verlötet und nicht ohne weiteres lösbar. In einer Ausgestaltung ist die Hülse ringförmig und - in Längsrichtung - relativ kurz ausgestaltet, weil Bohrungen die Verkopplungsmittel, z.B. eine Schraube bzw. Stifte, nur mit erhöhtem fertigungstechnischem Aufwand herstellbar sind. Bevorzugt ist dann aus Steifigkeitsgründen der Halter etwas dicker ausgestaltet.

In einer weiteren Ausgestaltung ist vorgesehen, dass die Verkopplungsmittel zum direkten Verkoppeln des Schneidkopfes mit dem Halter ausgebildet sind und dass die Hülse zwischen dem Halter und dem Schneidkopf geklemmt angeordnet ist. Der Schneidkopf ist dazu bevorzugt an seinem halterseitigen Ende ausreichend groß ausgebildet und reicht bevorzugt in die Aufnahmeöffnung des Halters hinein, um dann dort mittels der Verkopplungsmittel direkt mit dem Halter verkoppelt zu werden. Bevorzugt sind die Verkopplungsmittel dabei so ausgebildet, dass, insbesondere bei einstückig ausgebildetem Schneidkopf, zum Wechseln des Schneidkopfes die Verkopplungsmittel leicht gelöst werden können.

In einer anderen vorteilhaften Weiterbildung ist vorgesehen, dass die Hülse fest in die Aufnahmeöffnung des Halters eingesetzt ist, insbesondere in die Aufnahmeöffnung eingeschrumpft ist. Ein solch festes Einsetzen trägt zur Erhöhung der Steifigkeit und somit zur Genauigkeit des Werkzeugs bei, da die Hülse grundsätzlich während der Bearbeitung ihre Position gegenüber dem Halter nicht mehr verändern kann.

Erfindungsgemäß ist vorgesehen, dass der Schneidkopf an seinem halterseitigen Ende einen durch die Hülse bis in die Aufnahmeöffnung des Halters ragenden Fortsatz aufweist, insbesondere, um dann direkt mit dem Halter verkoppelt zu werden. In einer praxisnahen Ausgestaltung ist dazu vorgesehen, dass der Halter eine zumindest einseitig in die Aufnahmeöffnung mündende Halterquerbohrung aufweist, dass der Fortsatz eine dazu korrespondierende Schneidkopfquerbohrung aufweist und dass die Verkopplungs-mittel eine durch die Halterquerbohrung in die Schneidkopfquerbohrung mündende Schraube, insbesondere eine Kegelschraube, aufweisen. Diese Ausgestaltung bietet den Vorteil einer relativ einfachen Herstellbarkeit bei geringen Kosten.

In einer alternativen Ausgestaltung ist vorgesehen, dass der Halter mindestens eine, insbesondere zwei, in die Aufnahmeöffnung mündende Halterquerbohrungen aufweist, dass der Fortsatz eine dazu korrespondierende umlaufende Nut aufweist und dass die Verkopplungsmittel mindestens einen, insbesondere zwei, durch die Halterquerbohrung in die Nut eingreifende Stifte aufweisen. Auch diese Ausgestaltung bietet den Vorteil geringer Kosten bei gegenüber der zuvor beschriebenen Ausgestaltung verbessertem Handling.

Grundsätzlich kann die Erfindung bei jeglicher Art von Werkzeugen eingesetzt werden, bei denen stirnseitig am Halter ein Schneidkopf mit mindestens einem Schneidelement sitzt. Bevorzugt wird die Erfindung eingesetzt bei einem Kugelbahnfräser, bei dem das Werkzeug also als Kugelbahnfräswerkzeug ausgestaltet ist. Die Erfindung kann aber insbesondere auch bei anderen Fräswerkzeugen oder Bohrwerkzeugen vorteilhaft eingesetzt werden. Überhaupt ist die Erfindung für alle Arten der Bohrungsbearbeitung, wie z.B. auch Reiben oder Ausdrehen, einsetzbar, weshalb die erfindungsgemäße Art der Kupplung auch für Drehwerkzeuge angewandt werden kann.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Die Erfindung wird nachfolgend anhand der in den Zeichnungen dargestellten Ausführungsbeispiele näher erläutert. Es zeigen:
- Fig. 1 und 2: eine erste Ausführungsform eines erfindungsgemäßen Werkzeugs in zusammengebautem bzw. zerlegtem Zustand,
- Fig. 3 und 4: eine zweite Ausführungsform eines erfindungsgemäßen Werkzeugs in zusammengebautem bzw. zerlegtem Zustand,
- Fig. 5 und 6: eine erste alternative Ausführungsform eines vergleichbaren Werkzeugs in zusammengebautem bzw. zerlegtem Zustand,
- Fig. 7 und 8: eine zweite alternative Ausführungsform eines vergleichbaren Werkzeugs in zusammengebautem bzw. zerlegtem Zustand, und
- Fig. 9 und 10: eine dritte alternative Ausführungsform eines vergleichbaren Werkzeugs in zusammengebautem bzw. zerlegtem Zustand.

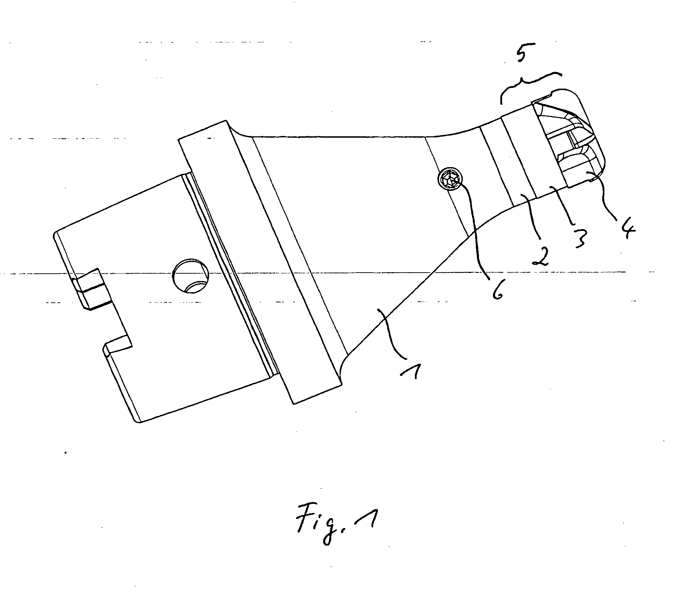

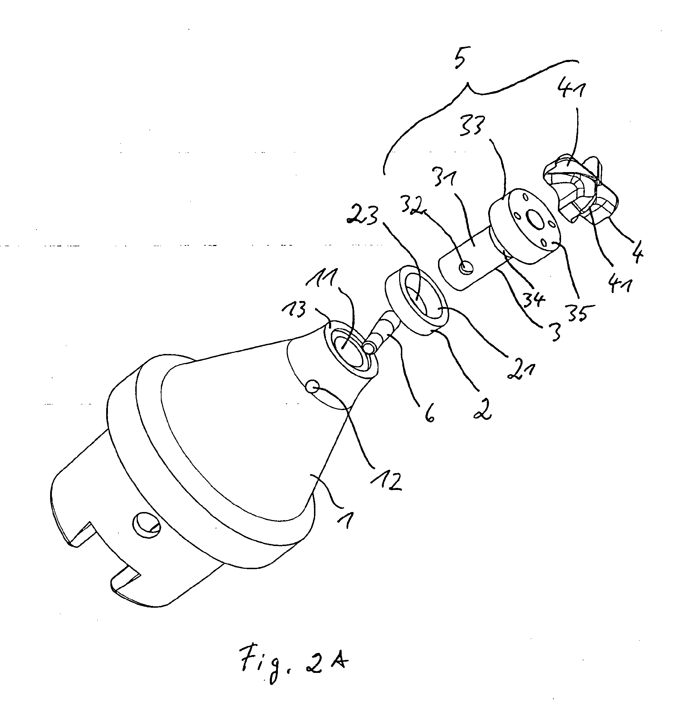

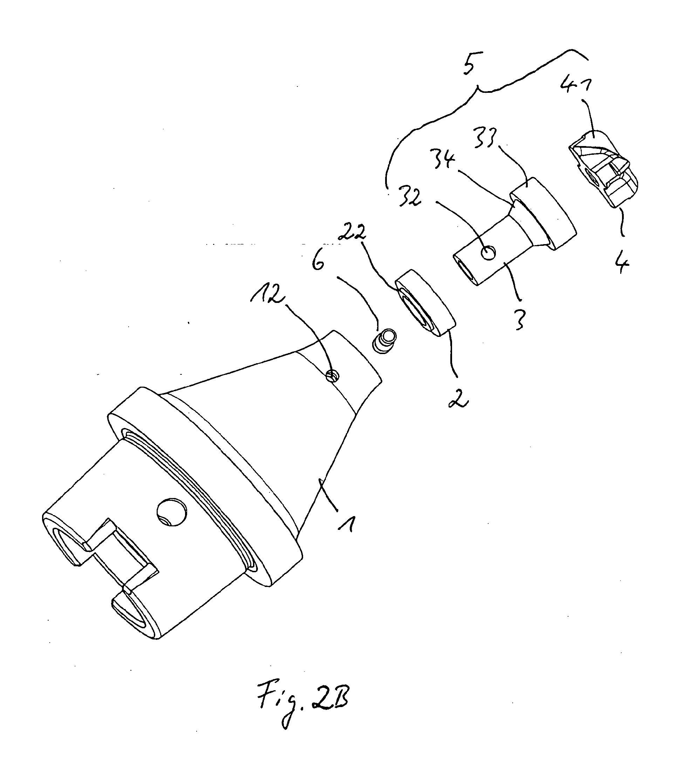

Fig. 1 und 2 zeigen eine erste Ausführungsform eines erfindungsgemäßen Werkzeugs in zusammengebautem (Fig. 1) bzw. zerlegtem (Fig. 2) Zustand. Das Werkzeug ist dabei als Kugelbahnfräser ausgestaltet und umfasst einen Halter 1, eine aus Hartmetall bestehende Hülse 2, einen zweistückigen, aus einem Schneidkopfhalter 3 und einem Schneidenträger 4 gebildeten Schneidkopf 5 sowie ein Verkopplungsmittel 6, das vorliegend in Form einer Kegelschraube gebildet ist. Die Form und Ausgestaltung des Halters 1 ist grundsätzlich bekannt und soll an dieser Stelle nicht weiter erläutert werden. Für die Erfindung wesentlich ist jedoch, dass der Halter stirnseitig an seinem werkstückseitigen Ende eine zentrale Aufnahmeöffnung 11 aufweist und dass quer dazu durch den werkstückseitig vorderen Bereich des Halters 1 eine Halterquerbohrung 12 verläuft. Diese Halterquerbohrung 12 verläuft zumindest so weit in den Halter 1, dass sie in die Aufnahmeöffnung 11 mündet. Alternativ kann die Halterquerbohrung 12 auch vollständig durch den Querschnitt des Halters 1 verlaufen. Aus Steifigkeitsgründen verläuft hier die Schraube 6 komplett durch den Halter 1 und wird an der gegenüberliegende Wandung des Halters 1 eingeschraubt.

Der Schneidkopfgrundkörper 3 weist an seinem halterseitigen Ende einen länglichen Fortsatz 31 auf, dessen Außendurchmesser geringfügig kleiner ist als der Innendurchmesser der Aufnahmeöffnung 11. Ferner verläuft quer durch diesen Fortsatz 31 eine Schneidkopfquerbohrung 32. Das werkstückseitige Ende 33 des Schneidkopfgrundkörpers 3 weist gegenüber dem Fortsatz 31 einen vergrößerten Querschnitt auf und geht in den Fortsatz 31 über eine kegelförmig verlaufende Übergangsfläche 34 über. Die werkstückseitige Stirnseite 35 des Schneidkopfgrundkörpers 3 ist abgeflacht, und auf dieser Stirnseite 35 ist der Schneidenträger 4 angeordnet, beispielsweise aufgelötet oder aufgeschweißt. Die Position, bei der der Außendurchmesser des Fortsatzes 31 an dem Innendurchmesser der Aufnahmeöffnung 11 anliegt, wird bevorzugt entweder an der kegelförmigen Übergangsfläche 34 oder alternativ an einer Zylinderfläche (hier nicht dargestellt) erreicht.

Der Schneidenträger 4 kann grundsätzlich einstückig und vollständig aus Hartmetall gebildet sein und ein oder mehrere Schneidkanten 41 tragen. Der Schneidenträger 4 kann aber auch größtenteils aus Stahl geformt sein mit aufgelöteten Hartmetallschneiden. Ferner ist es auch möglich, dass auswechselbare Schneidplatten in bekannter Weise auf dem Schneidenträger 4 angeordnet sind.

Die Hülse 2 weist, wie in Fig. 2A erkennbar ist, einen sich zum Halter 1 hin verjüngenden Querschnitt 21 auf, der quasi einen Innenkegel bildet zur Aufnahme der kegelförmigen Übergangsfläche 34 des Schneidkopfgrundkörpers 3. Wie in Fig. 2B erkennbar ist, weist die Hülse 2 ferner an ihrem halterseitigen Ende einen Einsatzring 22 auf, der einen geringeren Außendurchmesser aufweist als der Rest der Hülse 2 und so geformt ist, dass er in die Aufnahmeöffnung 11 eingreift, während der Rest der Hülse 2 auf dem stirnseitigen Rand 13 des Halters 1 aufliegt.

In zusammengesetztem Zustand sitzt die Hülse 2, teilweise in die Aufnahmeöffnung 11 des Halters eingesteckt, auf dessen oberem Rand 13. Durch die zentrale Hülsenbohrung 23 der Hülse 2 ragt der Fortsatz 31 des Schneidkopfgrundkörpers 3 in die Aufnahmeöffnung 11 hinein. Die Halterquerbohrung 12 und die Schneidkopfquerbohrung 32 sind so angeordnet, dass sie in diesem Zustand fluchten, so dass die Kegelschraube 6 durch beide Bohrungen hindurch verläuft und in ein in der Halterquerbohrung 12 und/oder der Schneidkopfquerbohrung 32 angeordnetes Gewinde eingeschraubt ist. Dieser Zustand ist in Fig. 1 gezeigt. Zum Wechseln des Schneidkopfes 5 wird die Kegelschraube 6 entfernt, wozu diese an einer Stirnseite einen Eingriff für ein entsprechendes Werkzeug, z.B. einen Innensechskant, aufweist. Sodann kann der Schneidkopf 5 herausgenommen und ein neuer Schneidkopf in den Halter 1 eingesteckt werden. Dies kann erfolgen, während der Halter 1 weiterhin in einer entsprechenden Werkzeugmaschine eingespannt ist.

Da die Hülse 2 vollständig aus Hartmetall ausgestaltet ist, bietet sie die erforderliche Steifigkeit während der spanenden Bearbeitung, die somit mit hoher Präzision erfolgen kann.

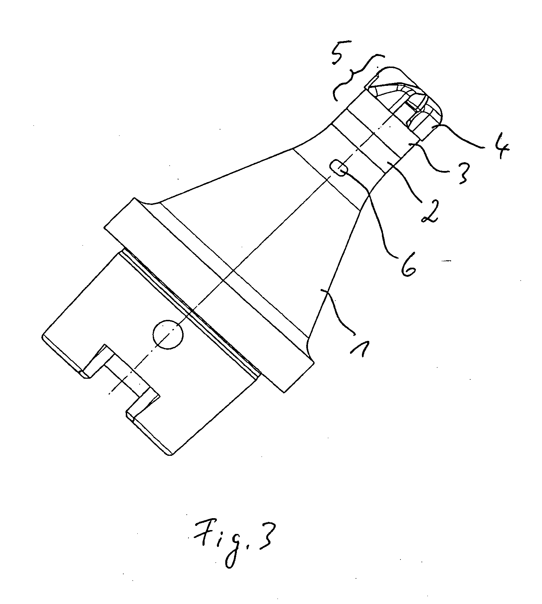

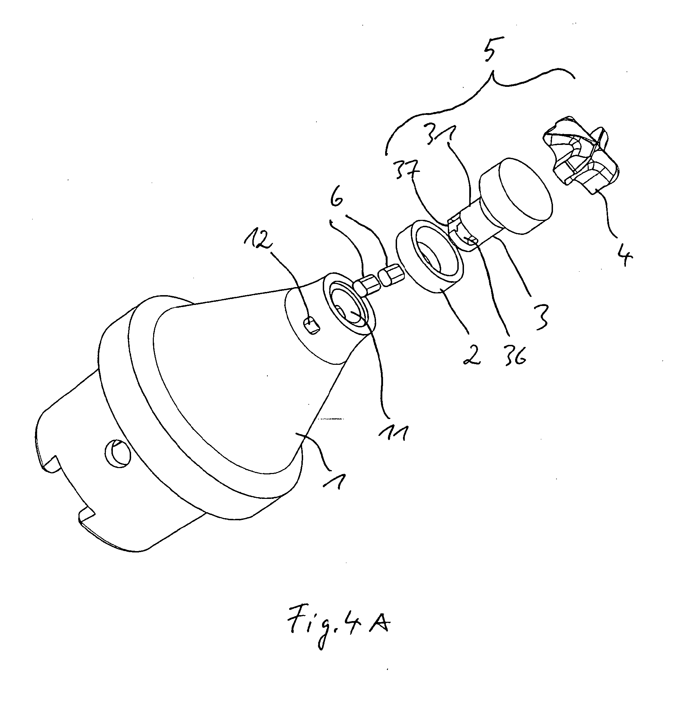

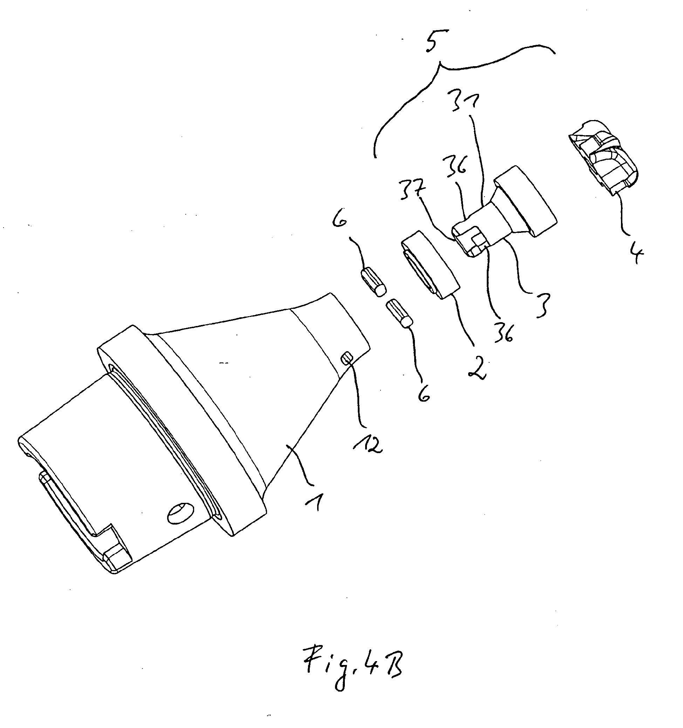

In den Fig. 3 und 4 ist eine zweite Ausführungsform eines erfindungsgemäßen Werkzeugs gezeigt. Der grundsätzliche Aufbau und die Funktion des Werkzeugs sind identisch wie bei der in Fig. 1 gezeigten Ausführungsform, so dass dies an dieser Stelle nicht weiter erläutert werden soll. Auch bei dieser Ausführungsform ist im Halter 1 eine Halterquerbohrung 12 vorgesehen, die bevorzugt - anders als die bei der ersten Ausführungsform vorgesehene Halterquerbohrung 12 - einen länglichen Querschnitt aufweist zum Einsetzen von entsprechenden Stiften 6 mit entsprechendem Querschnitt.

Der Schneidkopfgrundkörper 3 weist wiederum einen Fortsatz 31 auf, an dessen halterseitigem Ende nun aber von der halterseitigen Stirnseite 37 beabstandete Ringnuten 36 verlaufen, die an jeweils einer Stelle zur halterseitigen Stirnseite 37 hin abknicken.

Zum Zusammensetzen des Werkzeuges können zunächst die Stifte 6 in die Halterquerbohrung 12 eingesetzt werden. Sodann wird die Hülse 2 in die Aufnahmeöffnung 11 eingesteckt und danach der Schneidkopf 5 durch die Hülse 2 in die Aufnahmeöffnung 11 eingesetzt, so dass die in die Aufnahmeöffnung 11 hinein ragenden Enden der Stifte 6 über den abgewinkelten Teil in den ringsum verlaufenden Teil der Ringnut 36 gelangen. Sodann wird der Schneidkopf 5 um seine Längsachse verdreht und sitzt damit fest in dem Halter 1. Zum Auswechseln des Schneidkopfes 5 erfolgen diese Schritte in umgekehrter Richtung, wobei die Stifte 6 in der Halterquerbohrung 12 sitzend verbleiben können.

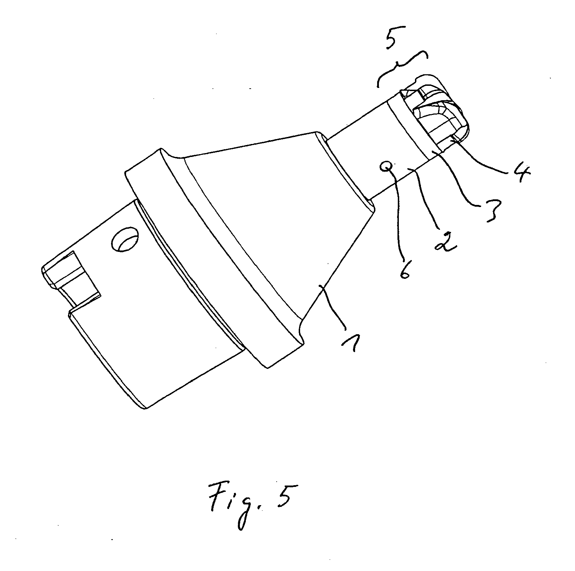

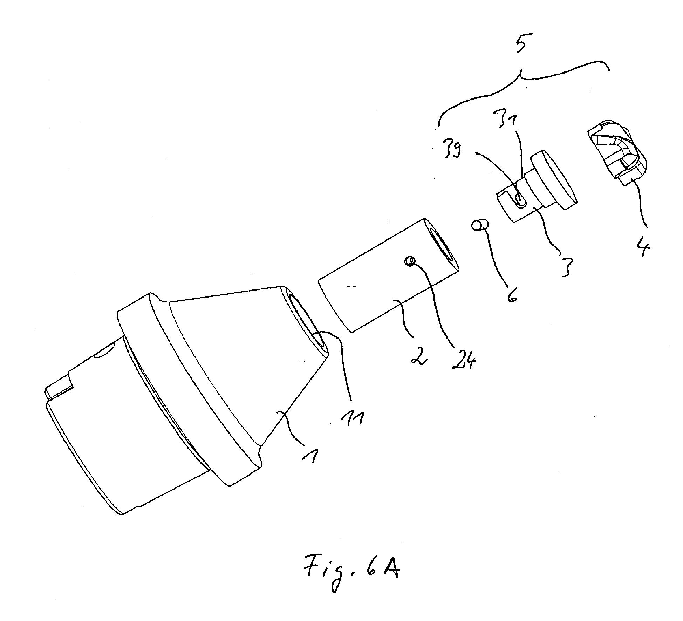

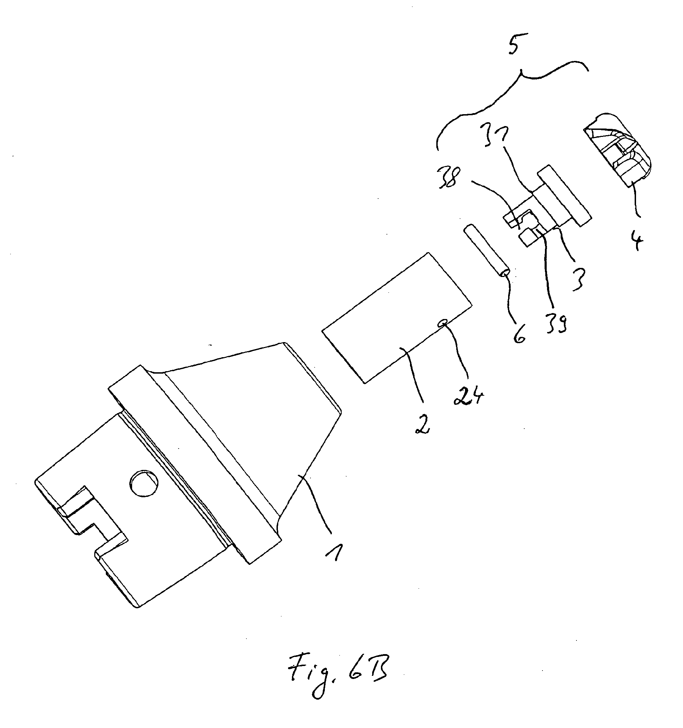

Die Fig. 5 und 6 zeigen eine erste alternative Ausführungsform eines vergleichbaren Werkzeugs. Anders als bei der ersten und zweiten Ausführungsform ist bei dieser Ausführungsform die Hülse 2 nicht als schmaler Ring ausgestaltet, der nur mit einem schmalen Endabschnitt 21 in der Aufnahmeöffnung 11 des Halters 1 sitzt, sondern die Hülse 2 ist bei dieser Ausführungsform rohrförmig ausgestaltet und sitzt mit einem größeren Teil ihrer Länge, also mit etwa 25 bis 50 % ihrer Länge, innerhalb der Aufnahmeöffnung 11 des Halters. Beispielsweise kann die Hülse 2 dort eingelötet oder eingeschrumpft sein. Ferner weist die Hülse 2 bei dieser Ausgestaltung im Bereich des werkstückseitigen Endes, also dem in zusammengesetztem Zustand nicht in der Aufnahmeöffnung 11 sitzenden Längsabschnitt, eine Hülsenquerbohrung 24 auf, deren Durchmesser dem Außendurchmesser des Stiftes 6 angepasst ist.

Der Schneidkopfgrundkörper 3 ist an seinem halterseitigen Ende nach Art eines Bajonettverschlusses ausgebildet und weist einen etwa über die Hälfte der Länge des Fortsatzes 31 verlaufenden Eingriff 38 auf, der etwa in der Mitte des Fortsatzes 31 in eine Ringnut 39 übergeht. Dadurch kann der Schneidkopf 5 beim Zusammenbau über den in der Hülsenquerbohrung 24 sitzenden Querstift 6 gesteckt und dann durch Verdrehung daran befestigt bzw. auf entsprechende Weise wieder gelöst werden.

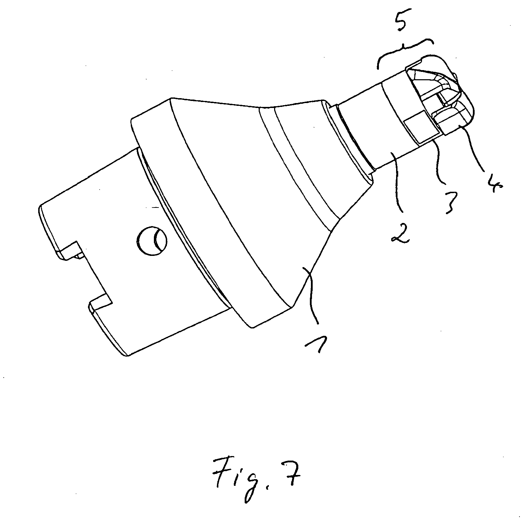

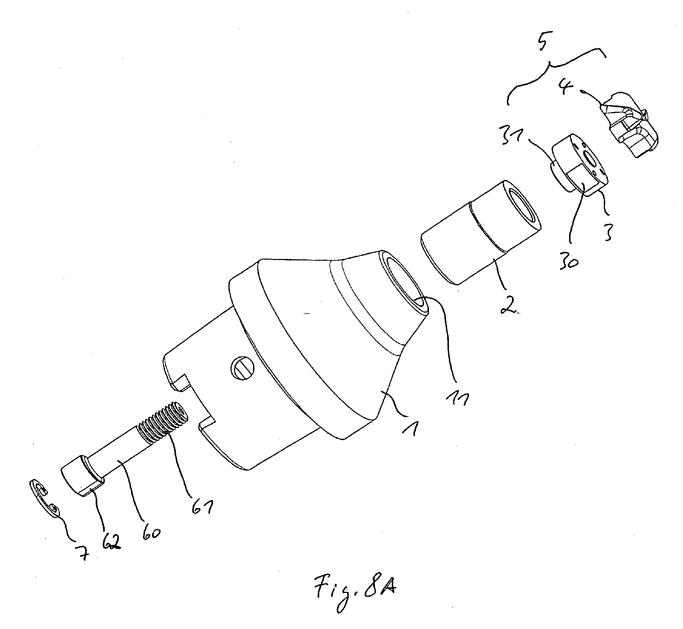

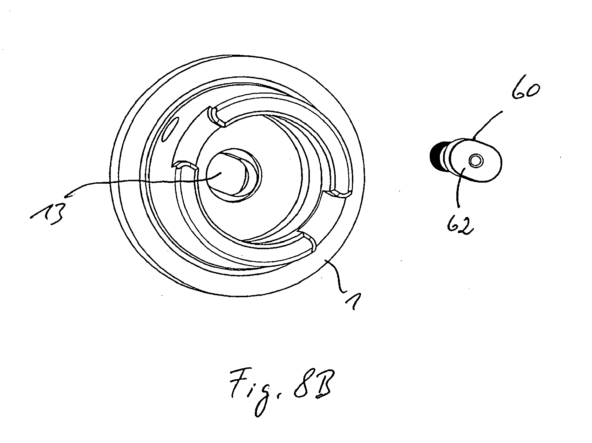

Die Fig. 7 und 8 zeigen eine zweite alternative Ausführungsform eines vergleichbaren Werkzeugs. Wie bei der ersten alternativen Ausführungsform ist bei dieser Ausführungsform die Hülse 2 rohrförmig ausgestaltet und sitzt zu einem großen Teil in der Aufnahmeöffnung 11 des Halters 1. Der Schneidkopfgrundkörper 3 weist bei dieser Ausführungsform jedoch nur einen kurzen Fortsatz 31 auf, der mit einem Gewinde, vorliegend einem Innengewinde (grundsätzlich ist jedoch auch ein Außengewinde möglich) versehen ist.

Die Verkopplungsmittel weisen bei dieser Ausführungsform eine Langschraube 60 auf, die ein zu dem Gewinde des Fortsatzes 31 korrespondierendes Gewinde, vorliegend ein Außengewinde 61, aufweist. Der Kopf 62 dieser Schraube 60 ist seitlich abgeflacht und sitzt in zusammengebautem Zustand in einer entsprechend geformten rückseitigen Durchgangsbohrung 13 des Halters 1 verdrehsicher angeordnet und kann mit einem Sicherungsring 7 gegen Herausfallen gesichert sein. Auf diese Schraube, die durch den gesamten Halter 1 und größtenteils durch die Hülse 2 hindurch ragt, wird der Schneidkopf 5 aufgeschraubt, wozu der Schneidkopfgrundkörper 3 seitliche, abgeflachte Angriffsflächen 30 für ein Werkzeug, z.B. einen Gabelschlüssel, aufweist. Der Schneidkopf 5 kann auf diese Weise besonders einfach gewechselt werden.

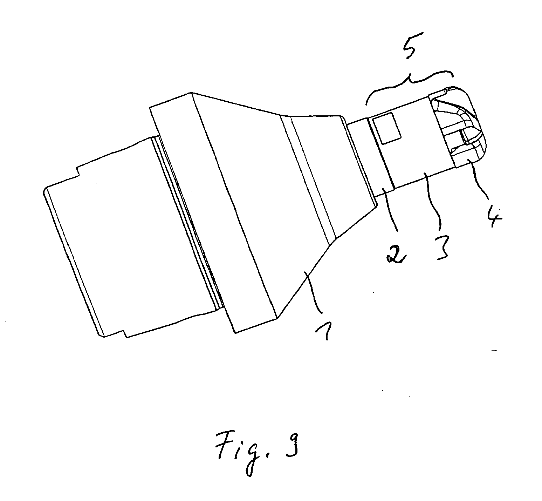

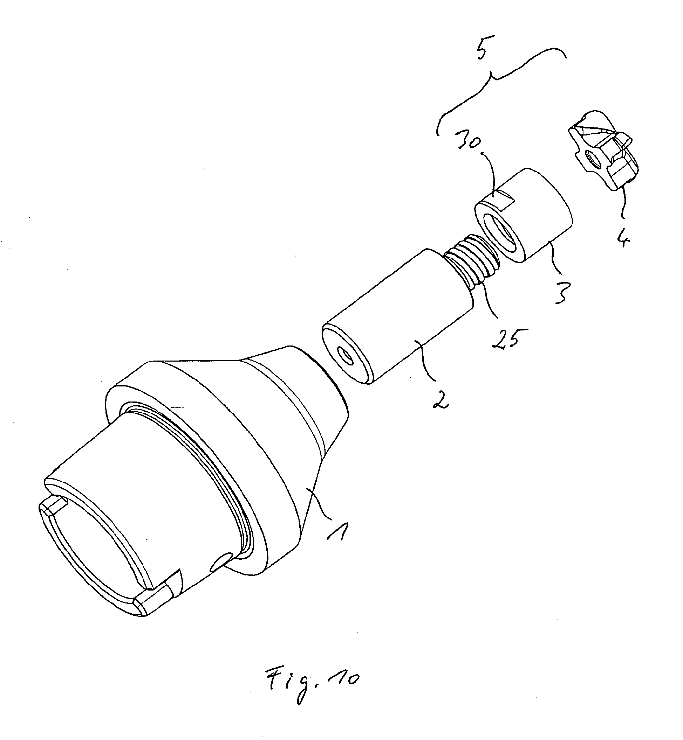

Eine dritte alternative Ausführungsform eines vergleichbaren Werkzeugs ist in den Fig. 9 und 10 gezeigt. Bei dieser Ausführungsform sitzt die Hülse 2 ebenfalls mit einem größeren Teil in der Aufnahmeöffnung 11 des Halters 1, weist aber nicht zwingend eine durchgängige Längsbohrung für die Verkopplung auf (als Kühlmittelversorgung ist in der Praxis meist aber doch ein Längskanal vorgesehen), sondern werkstückseitig an ihrer Stirnseite ein die Verkopplungsmittel darstellendes Außengewinde 25, das bei in dem Halter 1 eingesetztem Zustand der Hülse 2 aus dem Halter 1 vollständig herausschaut. Der Schneidkopfgrundkörper 3 weist ein dazu korrespondierendes Innengewinde auf und wird somit beim Zusammenbau des Werkzeuges auf das Außengewinde 25 der Hülse 2 aufgeschraubt. Auch bei dieser Ausführungsform lässt sich somit der Schneidkopf 5 auf einfache Weise wechseln.

Nur am Rande sei erwähnt, dass die Werkzeuge meist eine zentrale Längsbohrung bzw. kleine Öffnung für ein Kühlmedium (Luft, Minimalmengenschmierung oder Emulsion) aufweisen. Bei dem in der Zeichnung gezeigten Schneidkopf gehen von dieser Bohrung vier kleinere Bohrungen ab, welche das Kühlmedium an die Schneide leiten. Auch bei der zweiten und dritten alternativen Ausgestaltung befindet sich in der Schraube 60 bzw. der Hülse 2 eine solche Bohrung.

Die vorliegende Erfindung bietet somit eine einfache und kostengünstig zu realisierende Möglichkeit, einen Schneidkopf auswechselbar an einem Halter anzuordnen, ohne dass der Halter aus der Werkzeugmaschine ausgespannt werden muss. Dadurch, dass grundsätzlich keine Befestigungsmittel für die Befestigung der Schneidelemente, etwa von Schneidplatten, an dem Schneidkopf erforderlich sind, bietet sich auch die Möglichkeit, die Länge der Schneidkanten möglichst groß zu wählen, wodurch sich verbesserte Einsatzmöglichkeiten und ein Kostenvorteil für den Endbenutzer erzielen lassen.

Weiter ermöglicht die Erfindung höhere Schnitttiefen und ein Wechseln des Schneidkopfes in in der Maschine eingespanntem Zustand. Ferner kann die Schneiden bzw. Schneidengeometrien bei immer gleichem Halter leicht variiert werden. Das erfindungsgemäße Werkzeug ist vielseitig beim Drehen, Fräsen und allen Arten von Bohrungsbearbeitungen einsetzbar.

Die vorliegende Erfindung ist nicht auf die gezeigten und beschriebenen Ausführungsformen beschränkt. Insbesondere kann die Erfindung auch bei anderen Werkzeugen als Kugelbahnfräsern eingesetzt werden. Denkbare Anwendungen sind etwa Bohr- und Fräswerkzeuge, bei denen ein Schneidkopf mit einem Halter an dessen Stirnseite verkoppelt werden muss und bei denen eine hohe Biegesteifigkeit gewährleistet sein muss, um die geforderte Bearbeitungsgenauigkeit erzielen zu können.

Auch die Anzahl, Ausgestaltung und Anordnung der Schneidelemente an dem Schneidkopf ist grundsätzlich von keiner wesentlichen Bedeutung für die vorliegende Erfindung. Schließlich können auch der Halter und die Hülse anders ausgestaltet sein, sofern die geforderte Biegesteifigkeit durch die Hülse gewährleistet wird.

## Patentansprüche

1. Werkzeug für spanende Bearbeitung eines Werkstücks mit
- einem Halter (1) mit einer stirnseitig angeordneten Aufnahmeöffnung (11),
- einem Schneidkopf (5) mit mindestens einem, an dem werkstückseitigen Ende angeordneten Schneidelement (41),
- eine im Wesentlichen aus Hartmetall bestehende Hülse (2), die mit einem ersten, halterseitigen Ende (22) passgenau in die Aufnahmeöffnung (11) des Halters (1) eingesetzt ist und in oder an deren zweitem, schneidkopfseitigem Ende (23) der Schneidkopf (5) angeordnet ist, und
- Verkopplungsmittel (6) zum Verkoppeln von Halter, Schneidkopf und Hülse,
**dadurch gekennzeichnet, dass** der Schneidkopf (5) an seinem halterseitigen Ende einen durch die Hülse (2) bis in die Aufnahmeöffnung (11) des Halters (1) ragenden Fortsatz (31) aufweist.

2. Werkzeug nach Anspruch 1, **dadurch gekennzeichnet, dass** die Hülse (2) ringförmig ausgestaltet und in die Aufnahmeöffnung (11) des Halters (1) eingesetzt ist.

3. Werkzeug nach einem der vorstehenden Ansprüche, **dadurch gekennzeichnet, dass** die Verkopplungsmittel (6) zum direkten Verkoppeln des Schneidkopfes (5) mit dem Halter (1) ausgebildet sind und dass die Hülse (2) zwischen dem Halter (1) und dem Schneidkopf (5) geklemmt angeordnet ist.

4. Werkzeug nach Anspruch 1, **dadurch gekennzeichnet, dass** die Hülse (2) fest in die Aufnahmeöffnung (11) des Halter (1) eingesetzt ist, insbesondere in die Aufnahmeöffnung (11) eingeschrumpft ist.

5. Werkzeug nach einem der vorstehenden Ansprüche , **dadurch gekennzeichnet, dass** der Halter (1) eine zumindest einseitig in die Aufnahmeöffnung (11) mündende Halterquerbohrung (12) aufweist, dass der Fortsatz (31) eine dazu korrespondierende Schneidkopfquerbohrung (32) aufweist und dass die Verkopplungsmittel eine durch die Halterquerbohrung in die Schneidkopfquerbohrung (32) mündende Schraube (6), insbesondere eine Kegelschraube, aufweisen.

6. Werkzeug nach einem der Ansprüche 1 bis 4, **dadurch gekennzeichnet, dass** der Halter (1) mindestens eine, insbesondere zwei, in die Aufnahmeöffnung (11) mündende Halterquerbohrungen (12) aufweist, dass der Fortsatz (31) eine dazu korrespondierende umlaufende Nut (36) aufweist und dass die Verkopplungsmittel mindestens einen, insbesondere zwei, durch die Halterquerbohrung (12) in die Nut (36) eingreifende Stifte (6) aufweisen.

7. Werkzeug nach einem der vorstehenden Ansprüche, **dadurch gekennzeichnet, dass** das Werkzeug als Kugelbahnfräswerkzeug ausgestaltet ist.

## Claims

1. A tool for machining a workpiece, comprising
- a holder (1) having a locating opening arranged at the end face (11),
- a cutting head (5) having at least one cutting element (41) arranged on the workpiece-side end,
- a sleeve (2) which is made substantially of carbide and which, with a first, holder-side end (22), is inserted in an accurately fitting manner into the locating opening (11) of the holder (1), and the cutting head (5) is arranged in or on the second, cuttinghead-side end (23) of said sleeve, and
- coupling means for coupling the holder, cutting head and sleeve,
**characterized in that** the cutting head (5) has, at its holder-side end, an extension (31) which projects through the sleeve (2) right into the locating opening (11) of the holder (1).

2. The tool according to claim 1, **characterized in that** the sleeve (12) is of tubular design and is inserted into the locating opening of the holder (1).

3. The tool according to any one of the preceding claims, **characterized in that** the coupling means (6) is designed for directly coupling the cutting head (5) to the holder (1), and **in that** the sleeve (2) is arranged in a clamped manner between the holder (1) and the cutting head (5).

4. The tool according to claim 1, **characterized in that** the sleeve (2) is fixedly inserted into the locating opening (11) of the holder (1), in particular shrink-fitted into the locating opening (11).

5. The tool according to any one of the preceding claims, **characterized in that** the holder (1) has a holder transverse bore (12) which opens, at least on one side, into the locating opening (11), **in that** the extension (31) has a cutting head transverse bore (32) corresponding thereto, and **in that** the coupling means have a screw (32), in particular a taper screw (6), which leads into the cutting head transverse bore (32) through the holder transverse bore.

6. The tool according to any one of claims 1 to 4, **characterized in that** the holder (1) has at least one, in particular two holder transverse bores (12) which open into the locating opening (11), **in that** the extension (31) has a circumferential groove (36) corresponding thereto, and **in that** the coupling means have at least one, in particular two pins which engage in the groove (36) through the holder transverse bore (12).

7. The tool according to any one of the preceding claims, **characterized in that** the tool is configured as a ball race milling tool.

## Revendications

1. Outil pour l'usinage par enlèvement de copeaux d'une pièce, comprenant
- un support (1) avec une ouverture de réception (11) disposée du côté frontal,
- une tête de coupe (5) comprenant au moins un élément de coupe (41) disposé au niveau de l'extrémité du côté de la pièce,
- une douille (2) constituée sensiblement de métal dur, qui est insérée par une première extrémité du côté du support (22) avec ajustement étroit dans l'ouverture de réception (11) du support (1) et dans ou sur la deuxième extrémité du côté de la tête de coupe (23) de laquelle est disposée la tête de coupe (5), et
- des moyens d'accouplement (6) pour accoupler le support, la tête de coupe et la douille,
**caractérisé en ce que** la tête de coupe (5) présente, à son extrémité du côté du support, une saillie (31) pénétrant à travers la douille (2) jusque dans l'ouverture de réception (11) du support (1).

2. Outil selon la revendication 1, **caractérisé en ce que** la douille (2) est configurée sous forme annulaire et est insérée dans l'ouverture de réception (11) du support (1).

3. Outil selon l'une quelconque des revendications précédentes, **caractérisé en ce que** les moyens d'accouplement (6) sont réalisés pour l'accouplement direct de la tête de coupe (5) au support (1) et **en ce que** la douille (2) est disposée de manière serrée entre le support (1) et la tête de coupe (5).

4. Outil selon la revendication 1, **caractérisé en ce que** la douille (2) est insérée fixement dans l'ouverture de réception (11) du support (1), en particulier est compressée dans l'ouverture de réception (11).

5. Outil selon l'une quelconque des revendications précédentes, **caractérisé en ce que** le support (1) présente un alésage transversal de support (12) débouchant au moins d'un côté dans l'ouverture de réception (11), **en ce que** la saillie (31) présente un alésage transversal de tête de coupe (32) correspondant, et **en ce que** les moyens d'accouplement présentent une vis (6) débouchant à travers l'alésage transversal de support dans l'alésage transversal de tête de coupe (32), en particulier une vis conique.

6. Outil selon l'une quelconque des revendications 1 à 4, **caractérisé en ce que** le support (1) présente au moins un, en particulier deux, alésages transversaux de support (12), débouchant dans l'ouverture de réception (11), **en ce que** la saillie (31) présente une rainure périphérique (36) correspondante, et **en ce que** les moyens d'accouplement présentent au moins une, en particulier deux, goupille(s) (6) venant en prise à travers l'alésage transversal de support (12) dans la rainure (36).

7. Outil selon l'une quelconque des revendications précédentes, **caractérisé en ce que** l'outil est réalisé sous forme d'outil de fraisage de chemins de roulement.
